# EUROPÄISCHE PATENTANMELDUNG

(11) **EP 2 438 973 A1**
(43) Veröffentlichungstag der Anmeldung: **11.04.2012**
(21) Anmeldenummer: 11008091.8
(22) Anmeldetag: 06.10.2011
(51) Int. Cl.: B01D 29/11, B01D 29/64, B30B 9/12

(54) **Separator zur Abtrennung von Feststoffen aus insbesondere hochviskosen Flüssigkeiten**

(30) Priorität: 09.10.2010 DE 102010048028
(71) Anmelder: Kobel, Gerhard, 88239 Wangen / Allgäu (DE)
(72) Erfinder: Kobel, Gerhard, 88239 Wangen / Allgäu (DE)
(74) Vertreter: Riebling, Peter

(57) **Zusammenfassung**

Die Erfindung betrifft einen Separator zur Abtrennung von Feststoffen aus einer insbesondere hochviskosen Flüssigkeit eines zu filtrierenden Produktes, wobei am Aussenumfang des Kernelementes eine Vielzahl von Gleitelementen angeordnet sind, die bei drehendem Kernelement zum Abführen des Rückstandes an der Filterinnenwand entlanggleiten. Eine erste Ausführung sieht vor, dass die Gleitelemente als schneidende Gleitelemente ausgebildet sind. Eine zweite Ausführung sieht vor, dass die Gleitelemente als schabende Gleitelemente ausgebildet sind, die entlang mindestens einer gedachten Schraubenlinie hintereinander liegend auf dem Mantel des Kernelementes angeordnet sind und zwischen sich einen Abstand in axialer und/oder umfänglicher Richtung des Kernelementes aufweisen, durch welchen zu reinigende Flüssigkeit strömen kann. Aufgabe ist es, den Trennwirkungsgrad, d.h. das Verhältnis der Masse des gereinigten Endproduktes zur Masse des verunreinigten Ausgangsproduktes in kürzerer Trennzeit wesentlich zuerhöhen, ohne dass der Separator wesentlich kostenintensiver wird.

## Beschreibung

Die Erfindung betrifft einen Separator zur Abtrennung von Feststoffen aus insbesondere hochviskosen Flüssigkeiten, nach dem Oberbegriff des Patentanspruches 1 oder 3.

Die Patentschrift DE 34 20 18 zeigt eine kontinuierlich arbeitende Filterpresse mit mehreren zylindrischen Filterelementen, in deren Innenraum je eine drehbare Schrautaenwendel bzw. Spirale angeordnet ist. Das zu filternde Produkt wird so mit Hilfe der Spirale von oben nach unten axial entlang der Filterfläche vorbeigeführt und ein Teil der darin enthaltenen Feststoffe separiert. Im unteren Bereich der Spirale wird das Abtrennprodukt als Filterkuchen ausgeschieden. Nachteil ist der geringe Trenn-Wirkungsgrad, da die Spiralen durchgängig und ununterbrochen sind und daher zu viel Gutprodukt zusammen mit dem Abtrennprodukt aus der Filterpresse ausgeschieden wird.

Mit der DE 38 09 372 A1 wird ein kreisscheibenförmiger Filter aber auch Trommelfilter oder Bandfilter beschrieben der zur Trennung eines Feststoff-Flüssigkeits-Gemisches eingesetzt wird. Bei der Trennung eines Feststoff-Flüssigkeits-Gemisches wird bekanntlich die gesamte Filterfläche des Filters von dem von der Flüssigkeit abgetrennten Feststoff in Form eines zusammenhängenden Filterkuchens überzogen. Zum Ablösen des Filterkuchens von der Filterfläche ist häufig neben einer Kuchenabnahmevorrichtung auch noch eine besondere Abblasvorrichtung erforderlich, die einen erhöhten Energie- und Kostenaufwand mit sich bringt. Auch führt die Kuchen-Abblasvorrichtung sehr häufig wiederum zu einer unerwünschten Rückbefeuchtung des Filterkuchens und damit zur Verschlechterung des Trennwirkungsgrades. Diese Nachteile werden dadurch beseitigt, dass die Filterfläche von mehreren für das Filtrat undurchlässigen Zonen durchzogen ist, welche radial verlaufend angeordnet sind. Durch diese Zonen wird der Filterkuchen auf der Filterfläche sehr vorteilhaft in mehrere voneinander getrennte sektorförmige Teilflächen aufgeteilt, die sehr leicht, und zwar ohne besondere Abblasvorrichtung mit Hilfe des Schabers von der Filterfläche abgenommen werden können. Nachteil ist, dass nur ein einziger Schaber auf jeder Seite der Filterfläche vorgesehen ist, was natürlich eine erhebliche Einbuße beim Trennwirkungsgrad mit sich bringt, da sich der Filterkuchen überall dort ständig aufbaut, wo gerade der Schaber nicht arbeitet. Zudem fällt der durch den Schaber abgeschabte Filterkuchen unkontrolliert wieder zurück in die zu reinigende Flüssigkeit, so dass diese nur insgesamt aufkonzentriert wird, nicht aber mit gradueller bzw. konstanter Erhöhung der Feststoff-Konzentration hin zum Auslass, was zu einer weiteren Verringerung des Trennwirkungsgrades führt. Weiterer Nachteil ist, dass die Filterkuchenabnahmefläche des Schabers im 90°-Winkel zur Filterfläche verläuft, so dass Energie aufwändig geschabt wird und nicht geschnitten wird, was zu einer unerwünschten Erhöhung der aufzuwendenden Betriebsenergie als auch der Betriebszeit pro Einheit des gefilterten Filtergutes führt. Die DE 39 27 707 A1 offenbart eine Filterzentrifuge umfassend eine innerhalb eines Schleudergehäuses drehbar gelagerte zylindrische Trommel, deren Mantel siebartig perforiert und mit einem Filter abgedeckt ist. Einem achsparallelen Schälmesser, welches in eine Arbeitsstellung knapp vor der Filteroberfläche einschwenkbar ist und über die gesamte Trommelhöhe vorschiebbar ist, ist ein mechanischer Schaber nachgeschaltet, der federnd gegen die Oberfläche des Filters gedrückt ist. In einer Ausführungsform können zwei Reihen von Schaber-Blättchen schräg zur Drehrichtung der Trommel stehen. Hier besteht der Nachteil, dass der durch die zwei Reihen von Schaber-Blättchen abgetrennte Filterkuchen unkontrolliert wieder zurück in die zu reinigende Flüssigkeit fällt, so dass diese nur insgesamt aufkonzentriert wird, nicht aber mit gradueller bzw. konstanter Erhöhung der Feststoff-Konzentration hin zum Auslass, was zu einer Verringerung des Trennwirkungsgrades führt. Eine andere Ausführung sieht eine Art Scheibenegge vor, deren Scheiben schräg zur Trommelrichtung stehen, mit den zuvor erwähnten Nachteilen. Eine wiederum andere Ausführung sieht eine federnde Spirale als Schaber vor, die aber den Nachteil besitzt, dass die Spirale durchgängig und ununterbrochen ist und daher zu viel Gutprodukt zusammen mit dem Abtrennprodukt aus der Filterzentrifuge ausgeschieden wird, so dass der Trennwirkungsgrad verringert ist.

Die Vorrichtung der DE 198 52 119 C1 ist in Abwasserkläranlagen einsetzbar und dient zum Abscheiden von Schmutzwasser aus mit Feststoffen beladenen Abwässern, insbesondere auf Schiffen. Die Lösung besteht darin, dass eine Abscheideeinrichtung eine Hohlwelle aufweist, an der sich endseitig in Richtung des unteren Sammelraums eine, der Hohlwelle innenseitig entsprechend ausgebildete, drehbare Förderschnecke anschließt, die über die Schneckenflügel in einem Stützlager der Zwischenwand geführt Ist, und die Hohlwelle umfangsseitig Bürsten aufweist, die von einem Feinsiebzylinder umschlossen sind, wobei entweder die Hohlwelle drehbar und der Feinsiebzylinder fest angeordnet sind und umgekehrt, und die Förderschnecke jeweils entweder mit der drehbaren Hohlwelle oder dem Drehbaren Feinsiebzylinder verbunden ist, und der obere Sammelraum über Öffnungen, den Innenraum der Hohlwelle und der Förderschnecke und einen anschließenden Rohrkörper mit dem unteren Sammelraum verbunden ist Nachteil ist der geringe Trenn-Wirkungsgrad, da die Vielzahl von dicht gepackten spiralförmigen Bürsten nahezu wie eine durchgängige und ununterbrochene Spirale wirken und daher aus dem Schmutzwasser zu wenig Reinwasser abgefiltert wird, bevor das Schmutzwasser mit etwas höherer Schmutzkonzentration wieder aus der Vorrichtung ausgeschieden wird. Für hochviskose Flüssigkeiten wären übrigens die Bürsten vollkommen ungeeignet, da diese dann sehr rasch miteinander verkleben würden.

Die DE 10 2008 063 972 A1 bzw. WO 2010/070112 A1 offenbart bei der Schmelzkäseherstellung allgemein das Grundprinzip eines Ringfilters mit einem sich darin drehenden Kernelement, das an seinem Außenumfang mit Schabem besetzt ist, die sich am Innenumfang der Filterfläche entlang bewegen. Nachteil ist jedoch, dass die Schaber am Innenumfang der Filterfläche entlang schaben, d.h. der sogenannte Spanwinkel zwischen Schaber und der senkrechten Normale auf die Filterfläche Ist negativ, wobei der Schabewinkel zwischen Schaber und Filterfläche größer oder gleich 90° ist. Durch dieses Schaben werden die zu trennenden kleineren Feststoffe in die Löcher des Filters eingetrieben, so dass es in der Folge zu einer frühzeitigen Filterverblockung und Abnahme der Pumpleistung kommt. Weiterhin werden durch das Schaben, sowie durch die spezielle Anordnung und Orientierung der Schaber auf dem Kernelement, die zu trennenden größeren Feststoffe nicht in kleinere Teile zerteilt und nach unten hin abgeführt, sondern verbleiben über zu lange Zeit auf der Oberfläche des Filters im Bereich der Schaber, so dass auch dies zu einer frühzeitigen Filterverblockung und Abnahme der Pumpleistung führt, aber auch zu einer erhöhten Antriebsleistung des Drehmotors für das Kernelement. Insgesamt ist damit der Trennwirkungsgrad reduziert.

Aufgabe der vorliegenden Erfindung ist es, ausgehend vom zuvor genannten Stand der Technik, einen Filter bzw. Separator derart weiterzubilden, dass der Trennwirkungsgrad, d.h. das Verhältnis der Masse des gereinigten Endproduktes zur Masse des verunreinigten Ausgangsproduktes wesentlich erhöht wird. Zudem soll diese Erhöhung des Trennwirkungsgrades in kürzerer Trennzeit erfolgen, sowie die Trennvorrichtung nicht kostenintensiver als beim Stand der Technik sein.

Zur Lösung dieser Aufgaben dienen die Merkmale des unabhängigen Patentanspruches 1 oder 3.

Vorteilhafte Weiterbildungen sind Gegenstand der abhängigen Ansprüche.

Die vorliegende Erfindung unterscheidet sich zum einen von der DE 10 2008 063 972 A1 bzw. WO 2010/070112 A1 dadurch, dass im Betriebszustand die Gleitelemente mit der Tangentialen der Filterinnenwand einen Schnittwinkel zwischen 0° und 90°, sowie mit der senkrechten Normalen auf die Filterinnenwand einen positiven Abtragewinkel bilden. Im Gegensatz hierzu bilden die Schaber bei der nächst liegenden DE 10 2008 063 972 A1 bzw. WO 20101070112 A1 mit der Tangentialen der Filterinnenwand einen Schabewinkel größer 90°, sowie mit der senkrechten Normalen auf die Filterinnenwand einen negativen Abtragewinkel.

Vorteil hierbei ist, dass durch das Schneiden der Gleitelemente der vorliegenden Erfindung größere Schmutzpartikel zerkleinert und schnellst möglich in Richtung Auslass transportiert werden. Damit wird der Trennwirkungsgrad erhöht und die Trennzeit erniedrigt, ohne die Kosten für den Separator wesentlich zu erhöhen.

Die vorliegende Erfindung unterscheidet sich weiterhin von der DE 10 2008 063 972 A1 bzw. WO 2010/070112 A1 dadurch, dass eine besondere Förderung der zu filternden hochviskosen Flüssigkeit durch die spezielle Anordnung der Gleitelemente erfolgt, da diese etwa schraubenförmig angeordnet sind, um so einen forcierten Fluss der zu filternden hochviskosen Flüssigkeit in Richtung auf die Ausströmöffnung für das Abtrennprodukt zu erreichen.

Die Gleitelemente sind also entlang der Längsachse des Mantels des Kernelementes auf mindestens einer gedachten Schraubenlinie hintereinander liegend angeordnet und weisen zwischen sich einen Abstand in axialer und/oder umfänglicher Richtung des Kernelementes auf, durch welchen zu reinigende Flüssigkeit strömen kann. Insbesondere überlappen sich benachbarte Gleitelemente aber in umfänglicher Richtung des Kernelementes.

Vorteil hierbei ist, dass damit eine geringe spiralförmige Strömung der zu reinigenden Flüssigkeit in Richtung auf den Auslass hin erzeugt wird und die von der Filterinnernwand durch die Gleitelemente abgetragenen Schmutzteilchen recht schnell von Gleitelement zu Gleitelement in Richtung auf den Auslass transportiert werden und nur geringe Mengen davon wieder zurück in die zu reinigende Flüssigkeit und wieder auf den Filter gelangen. Durch den Abstand zwischen den Gleitelementen strömt die zu reinigende Flüssigkeit hauptsächlich in Richtung Filter und nur in geringem Maße spiralförmig in Richtung Auslass, so dass immer zunächst am Filter eine Trennung der Feststoffe von der Flüssigkeit erfolgt, bevor diese Feststoffe mit der geringen spiralförmigen Strömung und je nach Einbaulage ggfs. auch auf Grund der Gravitation insbesondere von Gleitelement zum nächsten axial beabstandeten Gleitelement auf der gleichen und/oder der benachbarten Spirale in Richtung Auslass befördert werden. Damit wird eine stark progressive Konzentrationserhöhung der Feststoffe in der Flüssigkeit vom Einlass zum Auslass erzeugt, so dass die durch die Gleitelemente vom Filter abgetragenen Feststoffe nicht mehrmals über die Filterhöhe gefiltert werden müssen, sondern im Idealfall nur ein einziges mal. Dies ist der Grund für die Erhöhung des Trennwirkungsgrades durch die spiralförmige Anordnung der voneinander geringfügig beanstandeten Gleitelemente.

Hierdurch ist es bei der Verarbeitung eines zu filternden Produktesmöglich, Schmutzfracht derart herauszufiltern, dass nur noch z.B. unter 0,1% der Menge des ursprünglichen Gutprodukts im Abtrennprodukt enthalten ist, was mit der bisherigen Technik bisher nicht möglich war. Wichtig hierbei ist, dass in dem Abtrennprodukt kaum Gutprodukt drin ist, so dass eine ausgezeichnete Unterscheidung zwischen dem Gutprodukt und dem Abtrennprodukt erfolgt, ohne dass die Gefahr besteht, dass das allzuviel Gutprodukt mit dem Abtrennprodukt mit ausgeschieden wird. Kern der Erfindung liegt in der besonderen Abrelnigungstechnik, bei der auf einen zylindrischen oder auch konischen Kern einer Abreinigungsvorrichtung eine mehrgängige Schraubenwendel angeordnet ist und im Bereich dieser Schraubenwendel senkrecht hierzu stehende und im Abstand voneinander befindliche Gleitelemente aus Kunststoff angeordnet sind, die sich in Biegerichtung elastomer federnd an die Innenwand des Filters anlegen und in Schubrichtung über die Filterinnenwandung streichen, um so eine Separierung des Gutproduktes vom Schlechtprodukt zu ermöglichen. Es geschieht so eine Reinigung der Filterinnenwand durch Abschneiden der Partikel in/auf den Löchern und Weitertransport in Richtung Abfluss. Während des Transports Richtung Abfluss findet das Separieren statt, durch das immer wieder Gutprodukt durch die Löcher Richtung Sekundärseite gelangt und so das Produkt auf der Primärseite immer weiter eindickt.

Nachdem diese Gleitelemente schraubenförmig angeordnet sind, machen diese durch Drehung des Kernes auch eine entsprechende schraubenförmig, z. B. nach unten gerichtete Abreinigungsbewegung des Schlechtproduktes in Richtung auf den Boden des Filters, so dass das Schlechtprodukt von dem Boden leicht abgelassen werden kann und vom Gutprodukt dadurch separiert wird.

Durch die schraubenförmig gerichtete Abwärtsbewegung der Gleitelemente besteht der weitere Vorteil, dass das Schlechtprodukt im Bereich des Bodensumpfes sozusagen komprimiert wird und in komprimierter Form auch von dem bedarfsweise zu öffnenden Auslass entnommen werden kann.

### Beschreibung allgemein:

1. Separieren von festen Bestandteilen aus niedrig bis hochviskosen Produkten.
2. Produktmenge zwischen Filterinnenwand und Kernelement muss eine gewisse Größe aufweisen, dass sich das Produkt auf dem Transport durch die Kunststoffsegmente (Gleitelemente) nach unten eindickt.
3. Das Gutprodukt strömt auf die Sekundärseite des Filterelements, die Partikel größer als die Lochgröße des Filterelements werden von den Löchern weggeschoben oder abgeschnitten.
4. Die Partikel größer als Lochgröße werden nach unten transportiert und nach variabel zu bestimmenden Eindickungsgrad aus dem Auslass ausgeschleust.
5. Rein durch die Vorspannung der Kunststoffsegmente wird der Anpressdruck der Gleitelemente auf die Filterinnenwand erzeugt.Während dem Eindicken drückt die Schmutzfracht / Abgeschabtes Produkt /Partikel größer der 15 Lochung durch die Drehbewegung gegen den Kunststoff vom Spiralschaber und drückt diesen noch stärker an die Filterwandung. Desto mehr Schmutzfracht desto höher der Druck auf die Gleitelemente/ Spiralschaber, Man könnte also sagen, dass die Vorspannung vom Kunststoff nur für den beginn der Filterung nötig ist und nach dem Start die Gleitelemente / 20 Spiralschaber durch Ihre Form/ Schräge vom Produkt und der Schmutzfracht an die Filterwandung gedrückt werden.

### Funktionsbeschreibung:

1. Produkt strömt über den Produkteingang ins Gehäuse des Separators.
2. Produkt strömt, am Kernelement vorbei, Richtung Filterelement.
3. Produkt kleiner 50 µm strömt durch die Laserlöcher von der Primärseite zur Sekundärseite.
4. Partikel größer 50 µm bleiben vor oder in den Laserlöchern liegen.
5. Von der Sekundärseite des Filterelements fließt das gefilterte Produkt am Produktausgang aus dem Gehäuse heraus.
6. Durch die Drehbewegung der spiralförmig angeordneten Gleitelemente werden die Partikel vor den Laserlöchern von den Gleitelementen auf dem Filterelement weggeschoben.
7. Die teils in den Laserlöchern steckenden Partikel werden von den Gleitelementen abgeschnitten.
8. Es können nur Partikel, Fremdkörper oder ähnliches aus dem Gutprodukt separiert werden, die eine gewisse Eigenfestigkeit besitzen.
9. Hat ein Fremdkörper eine zu geringe Eigenfestigkeit, wird dieser entweder durch die Löcher gedrückt, oder vom Gleitelement abgeschnitten, sollte dieser noch ein Stück aus dem Loch vorstehen.
10. Durch die Anordnung der Gleitelemente werden die Partikel auf der Primärseite von den Löchern weggeschoben oder die teilweise in den Löchern steckenden Partikel abgeschnitten und Richtung Abschlammventil transportiert.
11. Durch den Transport Richtung Abschlammventil dickt das Produkt immer mehr ein, da das Gutprodukt durch die Löcher Richtung Sekundärseite gelangt und die Partikel größer 50 µm auf der Primärseite gehalten werden.
12. Nun beginnt die Separierung des Gutprodukts und den auszuschleusenden Partikeln.
13. Durch das immer weitere Eindicken des verschmutzten Produkts vor dem ausschleusen ist ein separieren von Partikeln möglich mit einer Restmenge von unter 10% Gutprodukt im ausgeschleusten Material.
14. Das Abschlammen funktioniert durch den Differenzdruck P1 Primär zu PO Atmosphäre.
15. Die Abschlammzeiten und Mengen sind rein von der Kontamination des zu filternden Produkts abhängig.
16. Je niedriger der Differenzdruck zwischen Primärseite und Sekundärseite, desto besser das Ergebnis der Separation.

Die Partikel, die nicht ganz durch die Löcher gehen, werden von den Gleitelementen in Form von Kunststoffsegmenten abgeschnitten. Die Gleitelemente legen sich an der Filterinnenwand über eine definierte Vorspannung, die durch die Anordnung der Gleitelementhalterung auf dem Kernelement erzeugt wird, durch die Eigenspannung des Gleitelernentmatehals an.

Die DE 10 2008 063 972 A1 bzw. WO 20101070112 A1 macht das über eine Ellipse, die sich wie ein Keil zwischen Schaberkern und Filterinnenwand klemmt. Nachteil: Sehr hohe Belastung vom Filterelement durch die Kräfte, die durch den Keil erzeugt werden.

Die Gleitelemente mit Freiwinkel ca. 20°, Keilwinkel ca.90°der vorliegenden Erfindung schneiden nach einer gewissen Betriebszeit, da sie sich selbst nachschärfen und sich der negative Spanwinkel mit dem Nachschärfen ändert, also positiv wird.

Die der DE 10 2008 063 972 A1 bzw. WO 2010/070112 A1 schabt nur, absoluter Freiwinkel von 90°, was eindeutig Schaben ist.

Die Anordnung des erfindungsgemäßen Gleitelementes ist gesehen im 3D Bild in 2 Dimensionen verschieden.

Das erfindungsgemäße Gleitelement ist eckig.

Der Spiralschaber ist eine ca. 180° Ronde / Halbkreis mit Haltelaschen und Schlitze dass sich der Kunststoff besser an die Filterwandung anlegt.

Die DE 10 2008 063 972 A1 bzw. WO 2010/070112 A1 beschreibt die Kontur der dort als "Lamellen" bezeichneten Gleitelemente nicht, das sind ineinander geschobene Ellipsen.

Die vorliegende Erfindung arbeitet nicht mit einem relativ kleinvolumigen Ringspalt, sondern benötigt einen relativ großvolumigen Ringraum.

Bei der Konstruktion der vorliegenden Erfindung wird eine Drehrichtung festgelegt und dadurch ergeben sich die Positionen und Ausrichtungen der Kunststoffsegmente, was bedeutet, dass ein Kernelement für Links oder Rechtslauf ausgelegt ist. Während der Produktion dreht das Kernelement also immer nur in eine Richtung.

Die Drehrichtung der vorliegenden Erfindung ist nicht relevant, da es auch spiegelverdreht (auf dem Kopf stehend) eingebaut werden kann.

Die vorliegende Erfindung dickt das Produkt ein und separiert die Partikel größer der Lochgröße des Filters aus.

Die DE 10 2008 063 972 A1 bzw. WO 2010/070112 A1 hat kein eindicken oder separieren.

Die erfindungsgemäßen Gleitelemente haben eine Dicke von bevorzugt t=1 mm, Die Schaber der DE 10 2008 063 972 A1 bzw. WO 2010/070112 A1 sind dicker. 112 und auch 3mm möglich je nach Produkt

Die erfindungsgemäßen Gleitelemente sind im Kernelement fest geklemmt oder dort in einem Schnellspannsystem eingeklipst.

Die Gleitelemente der DE 10 2008 063 972 A1 bzw. WO 2010/070112 A1 liegen lose in einem elliptischen Schlitz, wobei keine Befestigung und kein Einklipsen oder ähnliches erfolgt und die Gleitelemente beim Ein- und Ausbau aus dem Filterinnenraum sehr leicht herausfallen.

Die vorliegende Erfindung nutzt keine Strömungsgeschwindigkeiten.

Das die Gleitelemente tragende Kernelement hat bevorzugt einen Außendurchmesser von 80 mm und eine axiale Länge von ca. 550 mm, kann aber auch andere Dimensionen haben.

Die Vielzahl der Gleitelementhalterungen und darauf angebrachten Gleitelementen sind auch dem Kernelement in Form eines 2-gängigen Gewindes mit einer Steigung von je 50 mm verteilt. Die Position der Gleitelementhalterungen zur Achse des Kernelements liegt bevorzugt bei ca. 45°. Jedes Gleitelement ist dabei um 10 mm in Richtung der Längsachse des Kernelements zum benachbarten Gleitelement versetzt. Der Gleitelementhalter Ist auf dem Kernelement so aufgebracht (insbesondere aufgeschweißt), dass der Gleitelementhalter zur Tangente des Außenmantels des Kernelements etwa 10° einnimmt.

Es wird bevorzugt, dass es sich um ein 2-gängiges Gewinde handelt. Dabei sind die Gleitelementhalterungen 45° zur Mittelachse gedreht und sind 40mm lang. Ein 1,2,3,4......gängiges Gewinde würde genauso funktionieren, so dass sämtliche ein- und mehrfachen Gewindegänge beansprucht werden. Bevorzugt ist aber ein 2-gängiges Gewinde, da bei dieser Anordnung ca. 50 Stück Gleitelemente auf einem Gang und somit bei zwei Gängen 100 Stück Gleitelemente verteilt werden können.

### Der 10 mm Versatz:

Grundsätzlich ist der Versatz nötig um die abgeschnittenen Partikel, die sich auf den Gleitelementen ansammeln von einem Gleitelement aufs andere zu leiten. Die Gleitelemente sind also überlappend auf der Steigung angeordnet. Ist der Versatz 10 mm und z.B. 8 Gleitelemente auf eine Umdrehung, so wäre die Steigung 80 mm. Ist der Versatz 6 mm und 8 Gleitelemente auf eine Umdrehung, wäre die Steigung 48 mm. Eine Verzerrung von 48 mm auf die bevorzugten 50 mm Steigung ergibt sich durch die Umrechnung von Durchmesser und den Maßstab. Es ist aber unerheblich, welche Steigung tatsächlich eingesetzt wird. Der Versatz ist also die Steigung pro Gleitelement.

Das Filterelement kann zylindrisch aber auch kegelig sein.

Die Lochgröße des Filterelementes beträgt zwischen 30 und 400 µm, wobei das Lochbild und die Gestalt der Durchbrüche keine Rolle spielt.

Die Gleitelemente haben eine elastisch federnde Vorspannung im in den Filter eingebauten Zustand.

Die Gleitelemente sind am Kernelement angeschraubt oder dort geklemmt oder eingeklipst.

Es ist ein kontinuierlicher Betrieb oder ein Batchbetrieb mit dem erfindungsgemäßen Separator möglich, d.h. entweder ist das Ablassventil stets offen oder es wird nur nach einer längeren Betriebszeit zum vollständigen Entleeren des Separators geöffnet um anschließend geschlossen zu werden und den Separator neu zu füllen. Der erfindungsgemäße Separator kann in jeder beliebigen Lage betrieben werden, stehend mit Einlass oben und Ablass unten oder umgekehrt oder aber auch liegend oder gar schräg mit seiner Längsachse im Winkel zur Horizontalen.

Wichtig ist aber, dass das zu bearbeitende Produkt pumpfähig sein muss, wobei sich der der Anpressdruck der Pumpe durch die Art, Größe und Menge der Verschmutzung sowie der Viskosität des zu bearbeitenden Produktes ergibt.

Im Folgenden wird die Erfindung anhand zweier Ausführungsformen beispielhaft näher erläutert, wobei die Figuren zeigen:
Figur 1: Ein axialer Längsschnitt durch die Längsachse des erfindungsgemäßen Separators nach einer ersten Ausführungsform;
Figur 2: Ein radialer Querschnitt senkrecht auf die Längsachse des erfindungsgemäßen Separators nach Figur 1;
Figur 3: Schematisierte Längsansicht auf das zylindrische Kernelement der Figur 1 und 2;
Figur 4: Abwicklung des zylindrischen Kernelements der Figur 3;
Figur 5: Schematisierte Draufsicht auf das zylindrische Kernelement der Figur 3 mit Einzelheit des Einbauzustandes des Gleitelementes;
Figur 6: Gleitelement mit Keilwinkel von 90° und negativem Spanwinkel/Abhebewinkel für die erste Ausführungsform nach den Figuren 1-5 und für die zweite Ausführungsform nach den Figuren 8 und 9;
Figur 7: Gleitelement mit Keilwinkel von 30° und positivem Spanwinkel/Abhebewinkel für die erste Ausführungsform nach den Figuren 1-5 und für die zweite Ausführungsform nach den Figuren 8 und 9;
Figur 8: Ein axialer Längsschnitt durch die Längsachse des erfindungsgemäßen Separators nach einer ersten Ausführungsform:
Figur 9: Ein radialer Querschnitt senkrecht auf die Längsachse des erfindungsgemäßen Separators nach Figur 8.

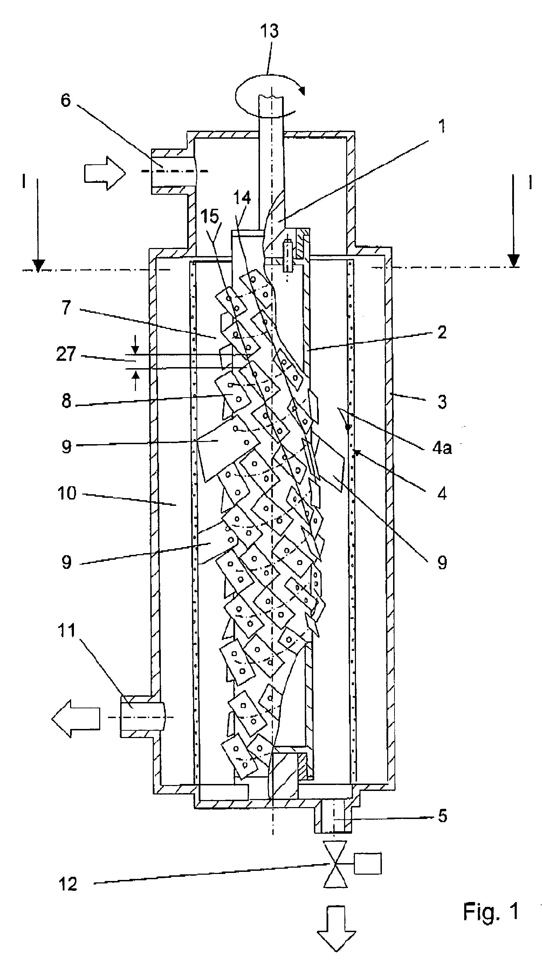

In Figur 1 ist der erfindungsgemäße Separator im Längsschnitt für eine erste Ausführungsform dargestellt, der im Innenraum 10 eines hohlzylindrischen stirnseitig geschlossenes Gehäuses 3 ein hohlzylindrisches stirnitig offenes Filterelement 4 mit Mantellochung im µm-Bereich aufweist, in dessen Innenraum 7 wiederum ein hohlzylindrisches Kernelement 2 aufgenommen ist, welches über eine Antriebswelle 1 mittels eines nicht dargestellten Elektromotors im Uhrzeigersinn 13 antreibbar ist.

Auf dem Außenmantel des drehbaren Kernelements 2 ist nun eine Vielzahl von Gleitelementhaltem 8 in einer speziellen Anordnung aufgenommen, die nachfolgend näher beschrieben wird, wobei auf diesen Gleitelementhaltern 8 jeweils ein Gleitelement 9, 9a, 9b aus Kunststoff aufgenommen ist.

I oberen Bereich ist im Gehäuse 3 ein Eingang 6 für das zu reinigende Produkt vorgesehen, welches dann primärseitig in den Innenraum 7 des Kernelementes 2 fließt. Bei Drehung des Kernelementes 2 wird nun das zu reinigende Produkt durch die Vielzahl der Gleitelemente 9 einerseits durch die Vielzahl von Öffnungen im µm-Bereich im Filterelement 4 als gereinigtes Produkt hindurchgefiltert und fließt aus dem Ausgang 11 für Gutprodukt aus. Andererseits werden die unerwünschten Feststoffe im zu reinigenden Produkt von der Innenwand 4a des Filterelementes 4 abgekratzt und zerkleinert, sowie spiralförmig nach unten in Richtung Ausgang 5 und Ablaufventil 12 gefördert, auf Grund der spiralförmigen Anordnung der Gleitelemente 9 auf dem Mantel des Kernelementes 2.

Wichtig hierbei ist, dass benachbarte Gleitelemente 9 einen Abstand 27 voneinander aufweisen, wobei die Gleitelemente 9 einer gedachten Spirale 14, 15 sich dabei aber umfänglich überlappen können.

Hierdurch nimmt die Konzentration von unerwünschten Feststoffen im Innenraum 10 des Gehäuses 3 von oben nach unten, d.h. vom Einlass 6 zum Auslass 5 stark progressiv zu, wobei am Boden des Gehäuses 3 die höchste Feststoffkonzentration herrscht.

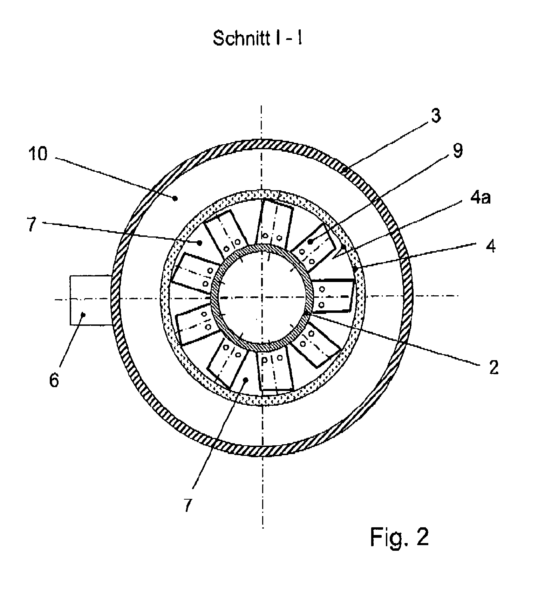

In Figur 2 ist ein radialer Querschnitt durch den Separator nach Figur 1 entlang der Pfeile 1-1 dargestellt.

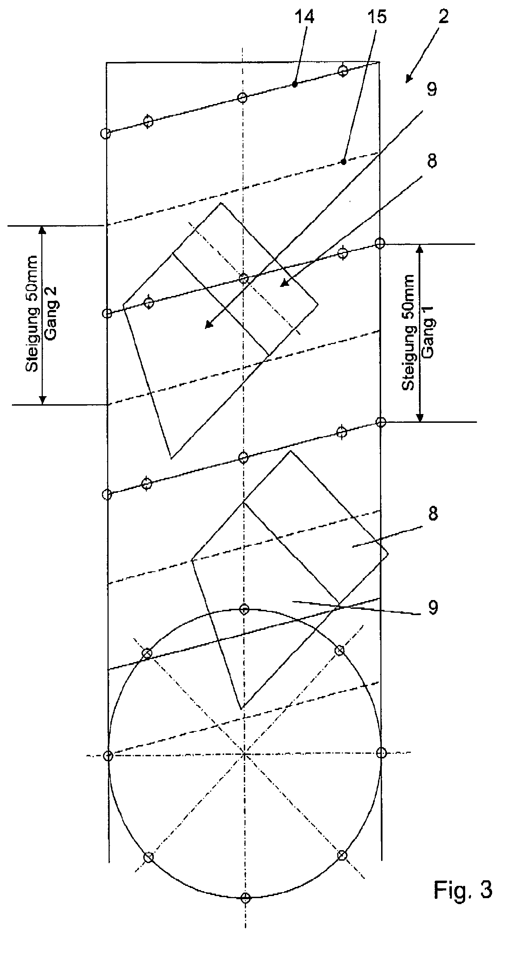

Figur 3 stellt schematisiert nur das Kernelement 2 mit den darauf angeordneten Gleitelementhaltern 8 und den wiederum darauf befestigten Gleitelementen 9 dar. Es ist zu erkennen, dass zwei voneinander um 25 mm axial versetzte gedachte Spiralen 14, 15 auf dem Mantel vorhanden sind, auf denen sich die Gleitelementhalter 8 mit Gleitelementen 9 befinden. Es ergibt sich damit eine Steigung von 50 mm für jede gedachten Spirale 14, 15 und einen axialen Versatz von ca. 10 mm für benachbarte Gleitelementhalter 8 mit Gleitelementen 9 auf einer der Spiralen 14, 15.

Pro Umdrehung der gedachten Spiralen 14, 15 sind 8 Stück Gleitelementhalter 8 mit je einem Gleitelement 9 gleichmäßig über den Umfang verteilt angeordnet, so dass sich ein Umfangs-Winkelabstand von 45° zwischen den Gleitelementhaltem 8 bzw. Gleitelementen 9 ergibt.

Die Gleitelementhalter 8 und Gleitelemente 9 auf der ersten gedachten Spirale 14 sind zu den Gleitelementhaltem 8 und Gleitelementen 9 der zweiten gedachten Spirale 15 zudem um einen Umfangs-Winkelabstand von 22,5° versetzt.

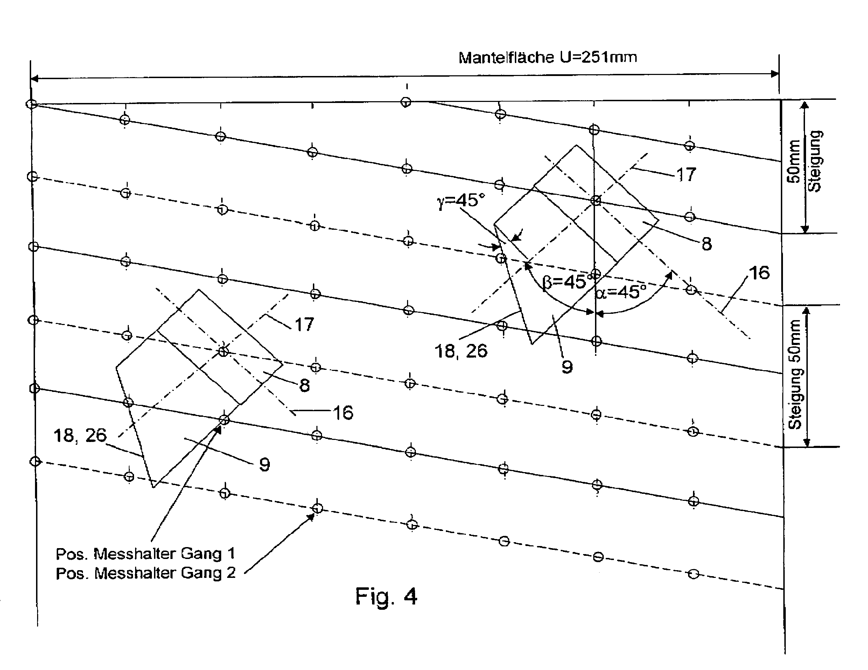

Figur 4 zeigt die Abwicklung des Zylinders des Kernelements 2 von Figur 3, aus der wiederum die Steigungen von je 50 mm für die beiden gedachten Spiralen 14, 15 hervorgehen, aber auch dass die Breitenachse 16 jedes Gleitelementhalters 8 und die Längsachsen 17 jedes Gleitelementes 9 um 45° zur Längsachse des Kernelements 2 gedreht sind. Dabei ist die Kontaktfläche 18 der Gleitelemente 9, die auf der Innenmantelfläche des Filters 4 laufen, ebenfalls um 45° zur Längsachsen 17 des Gleitelementes 9 angefast, damit die gesamte Stirnfläche 26 mit dem Filter 4 kontaktieren kann.

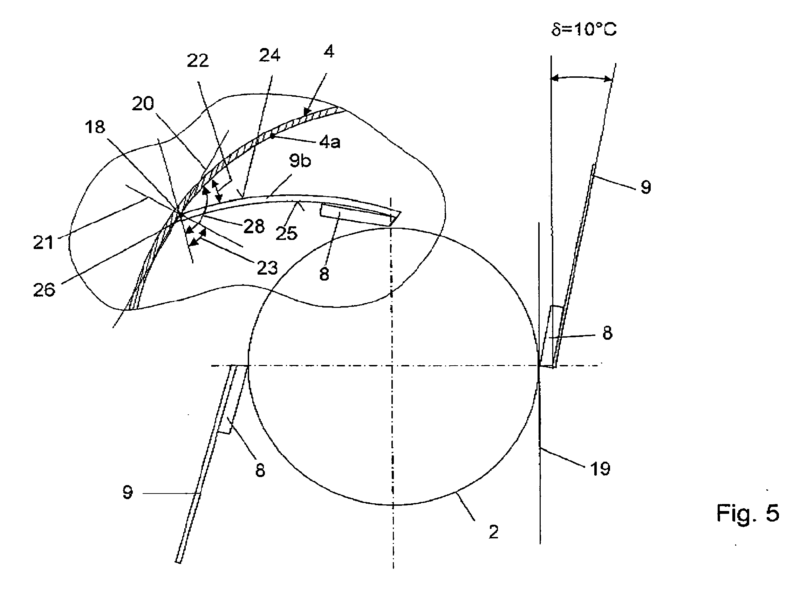

Figur 5 stellt schematisch die Winkelauslenkung des Gleitelementhalters 8 und des Gleitelementes 9 aus der Tangentialen 19 des Kernelements 2 von 10° im aus dem Filterelement 4 ausgebauten Zustand dar.

Im in das Filterelement 4 eingebauten Betriebszustand (siehe Fig.5 links oben) ist dann das Gleitelement 9b elastisch federnd in Richtung Tangentiale 20 des Filterelementes 4 gebogen.

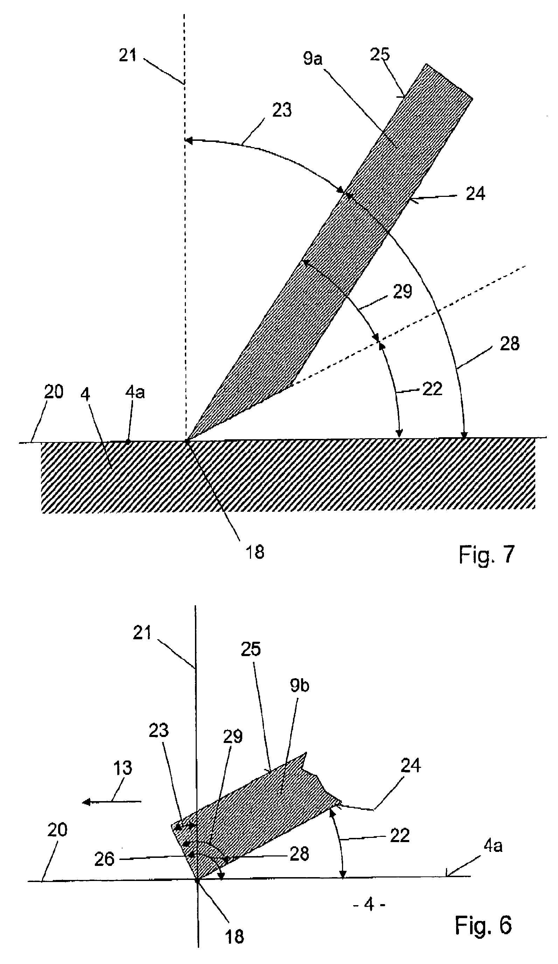

Nach Figuren 6 und 7 ist der Schnittwinkel 28 des Gleitelementes 9 definiert als Freiwinkel 22 plus Keilwinkel 29 des Gleitelements 9. Freiwinkel 22 ist der Winkel zwischen der Tangentialen 20 des Filterelements 4 und der radial äußeren Längsfläche 24 des Gleitelements 9. Der Keilwinkel 29 ist der Winkel des Keils, der die schneidende oder schabende Kante 18 des Gleitelements 9 bildet, der hier zwischen der radial äußeren Längsfläche 24 des Gleitelements 9 und der vorderen Stirnfläche 26 des Gleitelements 9 liegt.

Der Spanwinkel bzw. Abtragewinkel 23 des Gleitelements 9 ist dabei definiert als 90° (d.h. Winkel der Normalen 21 zur Tangentialen 20) minus Schnittwinkel 28, der beim "Schneiden" positiv und beim "Schaben" negativ ist.

In der Ausführung nach Figuren 5 und 6 liegt ein Gleitelement 9b vor, welcher einen Keilwinkel 29 von 90° aufweist, so dass der Spanwinkel bzw. Abtragewinkel 23 des Gleitelementes 9 negativ ist und bei minus 45° liegt, falls der Freiwinkel 22 bei z.B. 45° liegt, so dass der Schnittwinkel 28 bei 135° liegt.

Der Freiwinkel 22 ist in Figur 7 ca. 25°, der Keilwinkel 29 ca. 30°, daher ist der Schnittwinkel 28 hier ca. 55°, ebenso liegt der positive Span-/Abtragewinkel 23 bei +35°. Es liegt hier also ein schneidendes Gleitelement 9a vor.

Es werden daher bei der vorliegenden Erfindung schneidende Gleitelement 9a mit positiven und Gleitelement 9b mit negativen Spanwinkeln bzw. Abtragewinkeln 23 beansprucht.

Die zuvor genannten Merkmale der Figuren 6 und 7 bezüglich der Winkelverhältnisse der Gleitelemente 8 gelten für beide Ausführungsformen nach den Figuren 1-5 sowie Figuren 8 und 9, die nachfolgend beschrieben werden.

In Figuren 8 und 9 ist der erfindungsgemäße Separator der Figuren 1-7 in einer alternativen Ausführungsform dargestellt, wobei die Winkelanordnungen des Gleitelementes 9 der Figuren 6 und 7 aber in beiden Ausführungsformen identisch sind.

Im Unterschied zur ersten Ausführungsform der Figuren 1-7 sind in der zweiten Ausführungsform der Figuren 8 und 9 die Gleitelementhalter 8 und die Gleitelemente 9 selbst in Bezug auf einfache Montage/Demontage sowie Reinigungsmöglichkeiten verbessert.

Die Gleitelementhalter 8 sind aus zwei zueinander parallelen, einen geringen gegenseitigen Abstand von z.B. 2 cm einnehmenden Gleitelementhalter-Spiralen 34 z.B. aus Metalldraht gebildet, welche auf V-förmigen Bügeln 30 aufgebracht sind, die wiederum auf dem Außenmantel des Kernelements 2 aufgeschweißt sind. Die Gleitelementhalter-Spiralen 34 sind dabei durchgehend ununterbrochen oder eben durch kurze Abschnitte unterbrochen. Weiterhin beinhalten die Gleitelementhalter 8 Gleitelementhalter-Haken 31, welche im Abstand von z.B. 2 cm zur oberen Gleitelementhalter-Spirale 34 auf dem Außenmantel des Kernelements 2 aufgeschweißt sind und in welche die Gleitelemente 9 mit Aufnahmeösen 32 eingehängt bzw. eingeklipst werden können. Die Gleitelementhalter-Spiralen 34 sind dabei auf den freien Enden der Schenkel der V-förmigen Bügel 30 aufgeschweißt, die ihrerseits mit dem Verbindungspunkt der beiden Schenkel auf dem Außenmantel des Kernelements 2 aufgeschweißt sind.

Die Gleitelemente 9 sind weiterhin entlang mindestens einer gedachten Schraubenlinie 14 hintereinander liegend auf dem Mantel des Kernelementes 2 angeordnet sind und weisen zwischen sich einen Abstand 27 in axialer und/oder umfänglicher Richtung des Kernelementes 2 auf, durch welchen zu reinigende Flüssigkeit strömen kann.

Die Gleitelemente 9 sind auf einem oder mehreren Gleitelement-Spiralbändern 33 einstückig bzw. stoffschlüssig herausgeformt. Bevorzugt ist je ein 360°-Gleitelement-Spiralband 33 auf ca. 20 cm axiale Länge des Kernelements 2 vorgesehen.

Die Gleitelement-Spiralbänder 33 der Gleitelemente 9 werden dann zwischen die beiden Gleitelementhalter-Spiralen 34 eingeschoben, die oberen Aufnahmeösen 32 der Gleitelementhalter-Spiralen 34 werden in die Gleitelementhalter-Haken 31 formschlüssig eingehängt, und die Gleitelement-Spiralbänder 33 werden reibschlüssig nach unten gedrückt, so dass die gesamten Gleitelement-Spiralbänder 33 elastisch zwischen den beiden Gleitelementhalter-Spiralen 34 eingespannt und lagefixiert sind.

Die Haken 31 auf dem Kernelement 2 und Ösen 32 im Halter 8 können natürlich auch gegeneinander vertauscht sein, so dass die Haken 31 auf dem Halter 8 und die Ösen 32 auf dem Kernelement 2 vorgesehen sein können.

Im in das Filterelement 4 eingebauten Betriebszustand sind dann die Gleitelement-Spiralbänder 33 zwischen den Gleitelementhalter-Spiralen 34 elastisch federnd in Richtung Tangentiale 20 des Filterelementes 4 gebogen.

Vorteile dieser zweiten Ausführungsform sind, dass nur noch wenige Gleitelement-Spiralbänder 33 vorhanden sind, die durch einfaches Einspannen und Einklipsen in die Gleitelementhalter 8 einfach und schnell montierbar und demontierbar sind. Zudem sind die Auflageflächen zwischen den Gleitelement-Spiralbändern 33 und den Gleitelementhalter-Spiralen 34 verringert und weiter liegen die Gleitelement-Spiralbänder 33 auf den Gleitelementhalter-Spiralen 34 elastisch federnd auf, so dass eine Reinigung seltener, einfacher und schneller durchgeführt werden kann.

### Zeichnungslegende

- 1.: Antriebswelle
- 2.: Kernelement
- 3.: Gehäuse
- 4.: Filterelement mit µm-Mantellochung; 4a Filterinnenwand
- 5.: Ausgang Schlechtprodukt
- 6.: Eingang zu reinigendes Produkt
- 7.: Primärseite
- 8.: Gleitelementhalter für 9
- 9.: Gleitelement; schneidend 9a; schabend 9b
- 10.: Sekundärseite
- 11.: Ausgang Gutprodukt
- 12.: Ventil (Auf/Zu) in 5
- 13.: Drehrichtung von 2
- 14,: gedachte Spirale
- 15.: gedachte Spirale
- 16.: Breitenachse von 8
- 17.: Längsachse von 9
- 18.: Kontaktkante von 9 auf 4a
- 19.: Tangentiale von 2
- 20.: Tangentiale von 4a
- 21.: Normale auf 20
- 22.: Schnittwinkel
- 23.: Spanwinkel bzw. Abtragewinkel
- 24.: radial äußere Längsfläche von 9
- 25.: radial innere Längsfläche von 9
- 26.: vordere Stirnfläche 26 von 9
- 27.: Abstand zwischen 9
- 28.: Schnittwinkel
- 29.: Keilwinkel
- 30.: V-förmiger Bügel
- 31.: Gleitelementhalter-Haken
- 32.: Aufnahmeösen
- 33.: Gleitelement-Spiralband 34. zwei Gleitelementhalter-Spiralen

## Patentansprüche

1. Separator zur Abtrennung von Feststoffen aus einer insbesondere hochviskosen Flüssigkeit eines zu filtrierenden Produktes, aufweisend ein geschlossenes Gehäuse (3) mit einem Zulauf (6) für das zu filtrierende Produkt, einem Ablauf (11) für das filtrierte Produkt, einen Ausgang (5) für den abgefilterten Rückstand und einen zwischen Zulauf (6) und Ablauf (11) angeordneten Filtereinsatz (4) mit Filterinnenwand (4a), die in radialer Richtung von Innen nach Aussen von dem Produkt durchströmt wird, wobei ein drehbares Kernelement (2) im Filtereinsatz (4) koaxial angeordnet ist, wobei zwischen dem Kernelement (2) und der Filterinnenwand (4a) ein definierter Ringraum (7) ausgebildet ist, wobei das Kernelement (2) so dimensioniert ist, dass der entstehende Ringraum (7) einen konstanten Fluss des Produktes ermöglicht, wobei am Aussenumfang des Kernelementes (2) mindestens eine Vielzahl von Gleitelementen (9) angeordnet sind, die bei drehendem Kernelement (2) zum Abführen des Rückstandes an der Fliterinnenwand (4a) entlanggleiten, **dadurch gekennzeichnet, dass** die Gleitelemente (9) als schneidende Gleitelemente (9a) mit einem Keilwinkel (29) zwischen größer 0° und kleiner 90° ausgebildet sind und im Betriebszustand mit der Filterinnenwand (4a) einen Schnittwinkel (28) zwischen größer 0° und kleiner 90°, sowie einen positiven Abtragawinkei/Spanwinkel (23) zwischen kleiner 90° und größer 0° bilden.

2. Separator nach Anspruch 1, **dadurch gekennzeichnet, dass** die Gleitelemente (9a) entlang mindestens einer gedachten Schraubenlinie (14, 15) hintereinander liegend auf dem Mantel des Kernelementes (2) angeordnet sind und zwischen sich einen Abstand (27) aufweisen, durch welchen zu reinigende Flüssigkeit strömen kann.

3. Separator zur Abtrennung von Feststoffen aus einer insbesondere hochviskosen Flüssigkeit eines zu filtrierenden Produktes, aufweisend ein geschlossenes Gehäuse (3) mit einem Zulauf (6) für das zu filtrierende Produkt, einem Ablauf (11) für das filtrierte Produkt, einen Ausgang (5) für den abgefilterten Rückstand und einen zwischen Zulauf (6) und Ablauf (11) angeordneten Filtereinsatz (4) mit Filterinnenwand (4a), die in radialer Richtung von Innen nach Aussen von dem Produkt durchströmt wird, wobei ein drehbares Kernelement (2) im Filtereinsatz (4) koaxial angeordnet ist, wobei zwischen dem Kernelement (2) und der Filterinnenwand (4a) ein definierter Ringraum (7) ausgebildet ist, wobei das Kernelement (2) so dimensioniert ist, dass der entstehende Ringraum (7) einen konstanten Fluss des Produktes ermöglicht, wobei am Aussenumfang des Kernelementes (2) eine Vielzahl von Gleitelementen (9) in Form von schabenden Gleitelementen (9b) angeordnet sind, die bei drehendem Kernelement (2) zum Abführen des Rückstandes an der Filterinnenwand (4a) entlangschaben, wobei im Betriebszustand die Gleitelemente (9b) einen Keilwinkel (29) zwischen größer 90° und kleiner 180" aufweisen und mit der Filterinnenwand (4a) einen Schnittwinkel (28) zwischen größer 90° und kleiner 180°, sowie einen negativen Abtragewinkel, d.h. Spanwinkel (23) zwischen kleiner 0° und größer minus 90° bilden, **dadurch gekennzeichnet dass** die Gleitelemente (9b) entlang mindestens einer gedachten Schraubenlinie (14, 15) hintereinander liegend auf dem Mantel des Kernelementes (2) angeordnet sind und zwischen sich einen Abstand (27) in axialer und/oder umfänglicher Richtung des Kernelementes (2) aufweisen, durch welchen zu reinigende Flüssigkeit strömen kann.

4. Separator nach einem der Ansprüche 1-3, **dadurch gekennzeichnet, dass** zwischen benachbarten Gleitelementen (9) sich der Abstand (27) in axialer Richtung des Kernelementes (2) erstreckt und eine Überlappung in umfänglicher Richtung des Kernelementes (2) vorgesehen ist.

5. Separator nach einem der Ansprüche 1-4, **dadurch gekennzeichnet, dass** Breitenachsen (16) der Gleitelementhalter (8) und Längsachsen (17) der Gleitelemente (9) um 45° zur Längsachse des Kernelements (2) gedreht sind.

6. Separator nach einem der Ansprüche 1-5, **dadurch gekennzeichnet, dass** Kontaktflächen (18) der Gleitelemente (9), die auf der Innenmantelfläche des Filters (4) laufen, um 45° zur Längsachse (17) des Gleitelementes (9) angefast sind.

7. Separator nach einem der Ansprüche 1-6, **dadurch gekennzeichnet, dass** Gleitelementhalter (8) und Gleitelemente (9), im aus dem Filterelement (4) ausgebauten Zustand, aus einer Tangentialen (19) des Kernelements (2) eine Winkelauslenkung von etwa 10° aufweisen.

8. Separator nach einem der Ansprüche 1-7, **dadurch gekennzeichnet, dass** Gleitelemente (9), im in das Filterelement (4) eingebauten Betriebszustand, elastisch federnd in Richtung Tangentiale (20) des Filterelementes (4) gebogen sind.

9. Separator nach einem der Ansprüche 1-8, **dadurch gekennzeichnet**, dassdie Gleitelementhalter (8) zwei zueinander parallele Gleitelementhalter-Spiralen (34) beinhalten und Formschlusselemente (31), welche im Abstand zur oberen Gleitelementhalter-Spirale (34) auf dem Außenmantel des Kernelements (2) aufgebracht sind, wobei die Gleitelement-Spiralbänder (33) zwischen die beiden Gleitelementhalter-Spiralen (34) eingeschoben sind und die Gleitelemente (9) mit Gegen-Formschlusselementen (32) an den Formschlusselementen (31) der Gleitelementhalter (8) festgelegt sind, so dass damit die gesamten Gleitelement-Spiralbänder (33) elastisch zwischen den beiden Gleitelementhalter-Spiralen (34) eingespannt und lagefixiert sind.

10. Separator nach einem der Ansprüche 1-9, **dadurch gekennzeichnet, dass** die Gleitelemente (9) aus einem oder mehreren Gleitelement-Spiralbändern (33) einstückig bzw. stoffschlüssig herausgeformt sind.

11. Separator nach einem der Ansprüche 1-10, **dadurch gekennzeichnet, dass** der Filtereinsatz (4) Öffnungen mit einer Maschenweite zwischen 30 und 400 µm, insbesondere zwischen 50 und 200 µm, aufweist, wobei die von den Öffnungen gebildete Gesamtfläche etwa dem doppelten Querschnitt des Zulaufs (6) entspricht.

12. Separator nach einem der Ansprüche 1-11, **dadurch gekennzeichnet, dass** die Öffnungen durch Laserstrahlung in den Filter (4) eingebracht sind.

13. Separator nach einem der Ansprüche 1-12, **dadurch gekennzeichnet, dass** das Kernelement (2) mit einem Antrieb (1) ausgestattet ist, dessen Drehzahl in Abhängigkeit der Druckdifferenz zwischen Zulauf (6) und Ablauf (5) regelbar ist.

14. Separator nach einem der Ansprüche 1-13, **dadurch gekennzeichnet, dass** der Filter (4) und/oder das Kernelement (2) vollständig oder überwiegend aus Metall und die Gleitelemente (9) vollständig oder überwiegend aus Kunststoff ausgebildet sind.
